(19) **Europäisches Patentamt**
**European Patent Office**
**Office européen des brevets**

(11) **EP 3 587 267 A1**

(12) # EUROPEAN PATENT APPLICATION

(43) Date of publication:
**01.01.2020 Bulletin 2020/01**

(51) Int Cl.:
***B64D 13/00*** (2006.01)

(21) Application number: **18305838.7**

(22) Date of filing: **29.06.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **United Technologies Research Centre
Ireland
Cork City (IE)**

(72) Inventors:
• **Quartarone, Giusi**
  **Cork (IE)**
• **Thibaud, Catherine**
  **Cork City, Cork (IE)**

(74) Representative: **Dehns
St. Bride's House
10 Salisbury Square
London EC4Y 8JD (GB)**

(54) **ENVIRONMENTAL CONTROL SYSTEM**

(57)      An environment control system (ECS) (100) for controlling an environment in a vehicle is described, said system comprising at least one energy consuming component (20, 21, 31, 32, 33, 34, 35, 36), means for drawing external air into the environment and a controller (40), wherein said controller (40) is configured to control the flow rate of the external air being drawn into the environment based on the energy consumption of said at least one energy consuming component. A method of controlling airflow into an environment within a vehicle is also described herein and comprises: providing an environmental control system (100) that comprises a controller (40), means for drawing external air into said environment, and at least one energy consuming component (20, 21, 31, 32, 33, 34, 35, 36), and the method further comprising controlling, via the controller (40), the airflow rate of external air being drawn into the environment, the air flow rate being based on an energy consumption of the at least one energy consuming component (20, 21, 31, 32, 33, 34, 35, 36).

FIG. 1

EP 3 587 267 A1

**Description**

**TECHNICAL FIELD**

The examples described herein relate to environmental control systems (ECSs) for enclosed spaces within vehicles. The examples described herein also relate to methods for optimizing the mixing of outside air with the air inside the vehicle. In particular, the systems and methods described herein may be used in vehicles such as aircraft, spacecraft, submarines, or any other vehicle wherein humans or animals may be present within the enclosed space so that some control of its internal environment is required.

**BACKGROUND**

Environmental Control Systems (ECS) of various types and complexity are currently used for different applications, such as aircrafts, helicopters (both civil and military applications), spacecraft and submarines.

In an aircraft, the ECS is the most energy demanding of all the aircraft sub-systems. For example, a bleed ECS may consume up to 75% of non-propulsive power at cruise and up to 3-5% of the total power produced by the engines. This energy is mainly used to compress the outside air to a suitable level for the cabin environment. Today, the ECSs rely on a prescribed amount of fresh air per passenger (0.25 kg air/min - per FAA regulation) that contributes to (1) dilute the contaminants generated within the aircraft cabin,(2) provide adequate oxygen to the occupants/passengers, and (3) maintain cabin pressurization.

As a consequence, in many current ECSs, the cabin air contaminants are largely not measured and not filtered with the exception of ozone (via the ozone converter) and particulates (via the recirculation High-Efficiency Particulate Air (HEPA) filter). Moreover, thorough examination of cabin air composition is challenging as the concentration levels of many detected compounds are close to or even below the limit of detection of commercially available sensors. Furthermore, the establishment of a causal relationship between air quality and health complaints, and the understanding of the impact of indoor pollutant exposures on human health is an open question. All those reasons make the definition of the current level of cabin air quality difficult and incomplete. As a consequence of the partial understanding of cabin air quality levels, and its impact on human health, the definition of standards for the full range of contaminants is today not yet completed.

US 9,896,215 B2 describes an ECS that includes a sensor, an air purification subsystem and a controller in communication with both the sensor and the air purification subsystem. A signal is generated when the sensor detects a contaminant in the air. The controller then compares this contamination signal with a predicted sensory response threshold and when the contamination signal reaches the predicted sensory response threshold, the controller commands the air purification system to alter a condition in the air to remove contaminants from the air.

US 9,884,281 B2 describes an ECS having particulates in the air that includes a sensor, an air purification subsystem and a controller in communication with both the sensor and the air purification subsystem. A signal is generated when the sensor detects particulates in the air. The controller then compares a particulate concentration signal with a predicted particulate concentration threshold that is based on one of a probability of odour detection, a probability of sensory irritancy detection and a combination thereof. When the particulate concentration signal reaches the predicted particulate concentration threshold, the controller commands the air purification system to alter a condition in the air containing the particulates.

US 9,889,939 B2 describes an environmental control system that includes an air recirculation system that has a recirculation supply device that is coupled to an aircraft. The recirculation supply device is configured to move recirculated air mass within different portions of the aircraft interior at different flow rates.

US 2018/0065752 A1 describes an air conditioning system for an aircraft that aims to reduce the extracted engine bleed airflow to the aircraft cabin based on parameters such as the aircraft operational conditions, external environment and cooling/heating equipment capabilities.

US 20160318613 A1 and US 2016/0214723 A1 describe an ECS that includes sensors, an air purification subsystem and controller in communication with the sensors and air purification subsystem. The sensors detect contaminants in outside air and makes changes to the outside air/recirculated air based on comparisons to thresholds.

**SUMMARY**

An ECS is described herein for controlling an environment in a vehicle. The system comprises a first, or at least one, energy consuming component and means for drawing external air into the environment. The system also comprises a controller that is configured to control the flow rate of the external air being drawn into the environment based on the energy consumption of first, or at least one energy consuming component.

Another environment control system (ECS) for controlling an environment in a vehicle is described herein, the system comprising at least one energy consuming component and means for drawing external air into the environment; and a controller being configured to control: a flow rate of the external air being drawn into the environment, and/or control at least one operating parameter or operating point of the energy consuming component based on a combination of an energy consumption of the at least one energy consuming component and the flow rate. In some examples it may be based on either the energy consumption of the energy consuming component or the flow rate alone. In other examples, other factors may be used to control the operating parameters or points of the energy consuming component.

In some examples, the system comprises at least one energy consuming component, and means for drawing external air into the environment; and a controller being configured to control a flow rate of the external air being drawn into the environment, based on an energy consumption of the at least one energy consuming component, and/or the controller may be configured to control at least one operating parameter or operating point of the energy consuming component based on the energy consumption of the at least one energy consuming component and/or the flow rate.

In some examples, the controller may be configured to control or change the flow rate of the external air being drawn into the environment and/or at least one operating parameter of the energy consuming component based on a change in the energy consumption of the at least one energy consuming component.

This change in energy consumption may itself have come about due to a change in the flow rate of air being drawn into the environment.

In any of the examples described herein, the controller may be further configured to alter operating conditions for the at least one energy consuming component based on a change in the energy consumption of the at least one energy consuming component and/or a change in the flow rate.

In any of the examples described herein, the system may monitor the energy consumption of the at least one energy consuming device and alter the flow rate based on a detected change in the energy consumption.

In any of the examples described herein, the system may change the operating conditions of the at least one energy consuming device based on the fact that its energy has changed due to the change in flow rate.

In any of the examples described herein, the vehicle may be an aircraft, a submarine, a space ship, or indeed any other vehicle that may have an environment in which humans or animals require a suitable quality of air to breathe.

In any of the examples described herein, the controller may be further configured to calculate an optimal air flow rate for the external air being drawn into the environment based on the energy consumption of the at least one energy consuming component.

In any of the examples described herein, the controller may be further configured to output operating conditions for the at least one energy consuming component based on the energy consumption of the at least one energy consuming component.

In any of the examples described herein, the controller may be further configured to alter, or change the operating conditions for the at least one energy consuming component based on the energy consumption of the at least one energy consuming component.

In any of the examples described herein, the controller may use an algorithmic methodology to control the flow rate, and the algorithm may comprise:

$$\begin{bmatrix} \dot{q}_{ext\,air\,OPT} \\ OP_1 \\ \dots \\ OP_N \end{bmatrix} = \min \overset{N = \# \, of \, components}{\overset{consuming \, a \, variable \, energy}{\sum_{i=1}}} E_i \left( \dot{q}_{ext\,air}, t, \#PAX, Flight\ segment \right.$$

$$\left. / \, duration, OP \dots \right)$$

$$s.t. \quad cabin\ air\ quality\ constraints$$

where $E_i$ represents the energy consumption associated with the at least one component i at a given aircraft operating condition.

In any of the examples described herein, the controller may be configured to calculate the air flow rate by further taking into account vehicle operating condition or conditions, the condition or conditions comprising any, or all, of: an external air flow $\dot{q}_{ext\,air}$, time, a number of passengers within the vehicle, a flight/journey segment and/or duration, a working operative point.

In examples wherein the vehicle is an aircraft, the controller may be configured to calculate the air flow rate by further taking into account aircraft operating condition or conditions, the condition or conditions comprising any, or all, of: an external air flow $\dot{q}_{ext\,air}$, time, a number of passengers within the aircraft, a flight/journey segment and/or duration, a working operative point.

In any of the examples described herein, the system may comprise at least one air quality sensor and the controller may be further configured to calculate an optimal air flow rate based on a cabin air quality level that has been measured by the at least one air quality sensor.

In any of the examples described herein, the energy consumption of the at least one energy consuming component may be affected by a change in the flow rate. For example, a reduction in flow rate may affect the energy consumption of the other component by increasing its energy consumption.

In any of the examples described herein, the energy consuming component may comprise any, or all of, but not limited to, an engine (bleed ECS), an electric compressor (electric ECS), Auxiliary Power Unit (APU) or ground air supply, a recirculation fan or fans, a dehumidification system, a cooling system, a gas and/or particulate filtration system, such as a $CO_2$ or VOC filtration system. Other energy consuming components may also be controlled by the controller in the ways and methods described herein and the examples described herein are not limited to only these components.

In any of the examples described herein, the controller may be configured to control and/or calculate the air flow rate based at a given vehicle operating condition or plurality of vehicle operating conditions.

A method of controlling airflow into an environment of a vehicle, said method comprising: providing an environmental control system (ECS) that comprises: a controller, means for drawing external air into said environment, and at least one energy consuming component, said method further comprising controlling, via said controller said airflow rate of external air being drawn into said environment, and/or at least one operating parameter of said at least one energy consuming component, based on a combination of an energy consumption of said at least one energy consuming component and said air flow rate.

A method of controlling airflow into a vehicle is also described herein, the method comprising: providing an environmental control system (ECS) that comprises a controller, means for drawing external air into said environment, and at least one energy consuming component. The method comprises controlling, via the controller, the airflow rate of external air being drawn into the environment, the air flow rate being based on an energy consumption of the at least one energy consuming component.

Another method of controlling airflow into a vehicle is described herein and comprises providing an environmental control system (ECS) that comprises a controller, means for drawing external air into said environment, and at least one energy consuming component. The method may comprise controlling, via the controller, the airflow rate of the external air being drawn into the environment, the air flow rate being based on an energy consumption of the at least one energy consuming component. In some examples, the method may further, or alternatively, comprise controlling, via the controller, at least one operating parameter or operating point of the at least one energy consuming component based on the energy consumption of the at least one energy consuming component.

In some methods, the controlling of the air flow rate and/or energy consuming component may be based on a combination of the air flow rate and the energy consumption of the component. In some examples the controlling is based on a combination of the changes in air flow rate and energy consumption.

In any of the examples described herein, the method may further comprise calculating, via the controller, an optimal air flow rate for the external air being drawn into the environment.

In any of the examples described herein, the method may comprise calculating, via the controller, an optimal air flow rate by further taking into account an aircraft operating condition or aircraft operating conditions, the vehicle operating condition or conditions comprising any, or all, of: an external air flow $\dot{q}_{ext\,air}$, time, a number of passengers, a flight/journey segment and/or duration, a working operative point.

In any of the examples described herein the method may further comprise calculating, via the controller, an optimal air flow rate based on an energy consumption of the at least one energy consuming component at a given vehicle operating condition or given vehicle operating conditions.

## BRIEF DESCRIPTION OF THE DRAWING

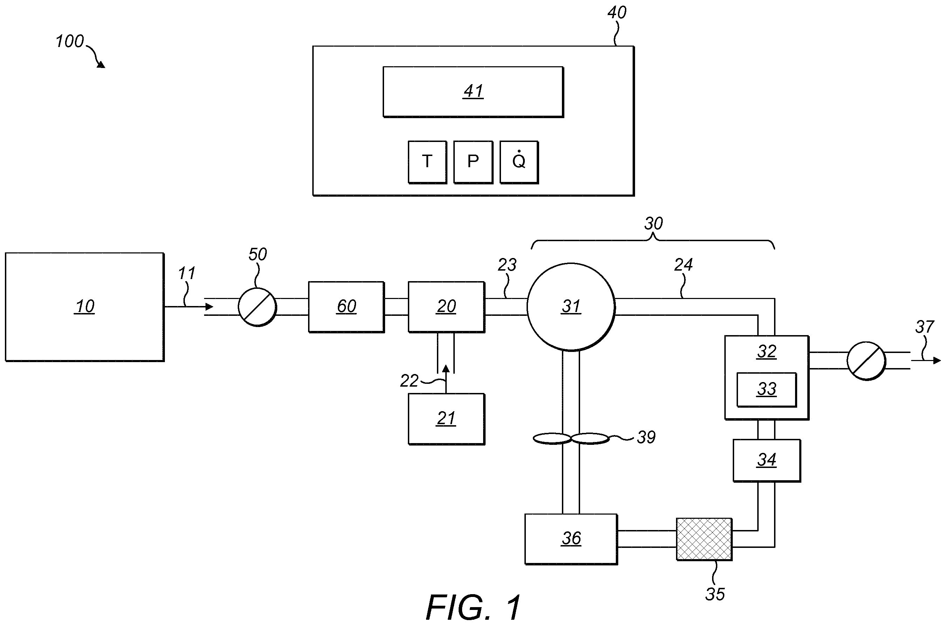

Figure 1 shows the components of an example of a new type of adaptive ECS as described herein.

## DETAILED DESCRIPTION

The examples described herein relate to a new adaptive environmental control system (aECS) and methods for reducing its energy consumption. These proposed systems and methods may be used in any situation wherein some control of an internal air quality and/or environment is necessary, such as in an aircraft, spacecraft, or submarine, for example. The systems and methods described herein may be particularly advantageous when used in a vehicle such as an aircraft. For example, the systems and methods may be used in an aECS of an aircraft that allows an adaptive regulation of the external air flow. In particular, the examples described herein relate to a method for optimizing the system components of an aECS when different external air flows are brought into the aircraft. Therefore, although the examples described herein are discussed in relation to the example of an aircraft ECSs, the systems and methods may also be used in other such applications.

Aircraft ECSs provide air to cabin occupants at a proper temperature, pressure and flow. As shown in figure 1, the ECS 100 includes an air source 10, such as a compressed air source. This may receive air from an engine bleed, APU as well as a ground air supply and may be compressed via a compressor such as an electric compressor. The ECS 100 further comprises an air conditioning pack 20, a distribution system 30 and control units 40.

The air source can be pneumatic or electric. In the case of a pneumatic air source, depending on the mission status, the air in a pneumatic (bleed) ECS is compressed by the engine compressor, an APU or simply provided from ground services when the aircraft is on the ground. Energy is required to compress the outside air that enters the compressor stages of the engine core and some of this air is then extracted. Bleed air extraction has a negative effect on engine performance; however, as it reduces the amount of air flow available to create thrust.

In the case of an electric ECS, this takes air directly from the atmosphere and compresses it using an electric compressor, driven by power which is extracted from the engine. This new technology has been implemented in the Boeing 787 aircraft. In both types of ECSs, the amount of compressed air is controlled by actuated flow control valves 50 such as that shown in figure 1. After the air has been compressed by the engine or by the electric compressor, it flows 11 to the flow control valve 50 and from there to air quality (AQ) sensors 60 enters the air-conditioning packs 20. From this point on, the architectures of the two systems are very similar.

The air-conditioning pack 20 may be an air cycle refrigeration system that uses the external cold air (often called Ram air 22) as a refrigerant. The air conditioning is made possible by a combined turbine and compressor, valves for temperature and flow control, and heat exchangers (not shown) that, through the ram circuit 21, reduce the compressed ventilation air temperature. In this way, the air-conditioning pack is able to provide air to the cabin at the proper temperature, flow rate, and pressure.

Different types of pack 20 architectures exist; they can be mainly categorized based on the number of rotating machines. Examples include: two wheel bootstrap (compressor + turbine), three wheel bootstrap (fan + compressor + turbine) and four wheel bootstrap (fan + compressor + two turbines).

Downstream of the air conditioning pack(s) 20, the ECS distribution system 30 begins. In this section of the system, the air conditioned air 23, which has now already flowed through the air-conditioning pack 20, is mixed with the cabin recirculated air 24 in the mixing manifold or mixing chamber 31. ECSs typically combine outside air and recirculated air from the cabin in about equal amounts (i.e. 50% outside (ventilation) air 23, 50% recycled air 24). In an aircraft, the air enters the cabin 32 from overhead distribution outlets throughout the length of the cabin 32. Additional optional components 33 might be installed in the distribution system such as additional coolers, heaters and air driers.

As can be seen in figure 1, the air 24 is circulated from the mixing chamber to the cabin, and also passes through air quality (AQ) sensors 34, HEPA filters 35, as well as gas and particulate filters, e.g. Carbon dioxide ($CO_2$) and Volatile Organic Carbon (VOC) filters before being reintroduced into the mixing chamber 31. Outboard air 37 is also released from the cabin 32.

A new type of adaptive environmental control system (aECS) is described herein. The aECS is able to adapt the external air flow 11 and to optimize the function of various aECS system components to reduce the overall system energy consumption without compromising the cabin air quality level.

In other words, the new aECS is able to (i) maintain the contaminants' concentration below threshold limits and therefore ensure a proper level of cabin air quality and passenger comfort, and (ii) reduce the fuel burn consumption associated with it.

Indeed, a reduction of the amount of external air flow 11 that is drawn into the aircraft provides the advantageous result of reducing engine energy consumption. This is because fuel burn consumption is required to compress the external air that is drawn into the aircraft. Therefore, the less external air drawn in, the less fuel the engine must use to compress the air.

Unfortunately, however, reducing the amount of air being drawn into the aircraft may have consequences for other components in the aircraft whose energy consumptions now have to be considered. For example, additional energy might have to be consumed to reduce the cabin air humidity or to additionally treat and/or condition the recirculated air if less air is being drawn in.

Indeed, whilst the engine consumption may, on the one hand, be lowered in one aspect, by reducing the external air flow 11, other system components may increase or decrease their energy consumption as a consequence of a higher recirculation rate. None of the known ECSs have recognised this problem, nor have they considered how to deal with this issue. The examples described herein therefore optimise the air flow and the operating parameters of the energy consuming devices based on a combination of the air flow rate and the energy that is consumed by those devices. In some examples, this is based on a combination of changes in the air flow rate and changes in energy consumption.

Examples of components of an aircraft that might change their energy consumption due to a change in the external air flow rate are: engine (bleed ECS) or electric compressor (electric ECS) or APU or ground air supply, recirculation fans 39, dehumidification system, cooling system and $CO_2$ filtration system. This list is not exhaustive, however, and there may be other components of the aircraft that require energy to function and that may also be affected in this way.

The energy consumption of those components might also depend not only on the external air flow rate, but also on other conditions, such as flight duration, flight segment, number of passengers, external ambient conditions, that determine different components Operating Points (OPs). Finally, the overall aECS energy consumption may also depend on aspects such as the components mass that need to be transported; however, these contributions are constant and/or do not (or slightly) change over time with the external air flow rate or other external conditions. For this reason, in some examples, the new aECS described herein may not take into account those contributions.

A reduced air flow could negatively impact the quality of air within the cabin, if it is not properly controlled and filtered; indeed, the contaminant dilution by the addition of fresh air into the cabin will no longer be effective. Moreover, as mentioned above, a reduced air flow might result into an increase of cabin air humidity above levels that might affect the filter efficiency and life cycle, as well as result into other consequences that negatively impact the aircraft at system levels (for example the weight of the cabin insulation might increase significantly). The adaptive ventilation system will explicitly rely upon the development of (i) air sensing technologies capable of detection of gaseous contaminants below the levels which are considered dangerous to health and (ii) a gas purification system capable of reliably removing hazardous species when necessary and (iii) the development of a methodology that regulates the system components (such as the air treatment technologies or the de-humidification system) and optimizes the mixing of outside and recirculated air, by looking at the contaminants' concentrations, the passenger comfort and the overall system (aircraft), subsystem (aECS) and components' (such as air treatment devices, additional cooling systems etc.) energy consumptions. This methodology is therefore able to regulate the system components working point and optimize the mixing of outside and recirculated air of an aECS (point (iii)).

The new aECS 100 described herein may comprise an additional controller 40 that is configured to control at least one of the following components: a Flow Control Valve (FCV) 50 that regulates the external air flow 11 (the FCV 50 can be connected to an engine (bleed ECS), an electric compressor (electric ECS) 10, an APU or ground air supply, the operating point of any component that may have an energy consumption altered due to a change in an intake of air such as, but not limited to, recirculation fans 39, a dehumidification system, an additional cooling and/or heating system and $CO_2$ filtration system 36. The FCV and components controller is depicted with the reference numeral 41 in figure 1.

The components shown in figure 1 may be positioned at various points throughout the ECS. For example, some additional components may be present within the cabin as shown in figure 1; however they might alternatively be located somewhere else. Similarly, the air quality components may sense contaminants in, and/or air characteristics of, the outside air supplied by the compressed air source and/or recirculating air. The air sensors, if properly installed, might be used to check the functioning of the filtration system 36.

The contaminants in the ECS may include, but are not limited to $CO_2$, particulate matter (PM) and VOCs 36.

Moreover, the controller 40 is configured to receive several inputs that are used to perform the control function, such as the air quality measurements from the array of air quality sensors, the components energy consumption, external conditions (such as number of passengers, external air properties, flight segment and duration). Note that the components' energy consumptions are optional inputs; indeed, in some examples, the controller 40 may have some internal knowledge (maps) on how to calculate the components' consumption given the external conditions.

The controller 40 of the new aECS 100 described herein may comprise a logic microprocessor or any other type of processor that is able to perform an algorithmic methodology.

The controller 40 is configured to use an algorithmic methodology to find the optimal external air flow $\dot{q}_{ext\,air\,OPT}$ and/or the components operating parameters (OPs). This can be achieved by the controller 40 being configured to solve the following equation

$$\begin{bmatrix} \dot{q}_{ext\,air\,OPT} \\ OP_1 \\ \dots \\ OP_N \end{bmatrix} = \min \overset{N\,=\,\#\,of\,components}{\underset{i=1}{\overset{consuming\,a\,variable\,energy}{\sum}}} E_i\,(\dot{q}_{ext\,air},t,\#PAX,Flight\,segment$$

$$/\,duration,OP\,\dots\,)$$

$$s.t. \quad cabin\,air\,quality\,constraints$$

where $E_i$ represents the energy consumption associated with the component i at a given condition. Such condition may depend on, but is not limited to, the external air flow $\dot{q}_{ext\,air}$, time, number of passengers, flight segment and/or duration, working operative point etc. etc.

The cabin air quality level represents a constraint of the optimization problem that must also be met. In this context, the cabin air quality level assumes a generic meaning and can be adapted based on different cabin air quality definitions. Moreover, such constraint can be a collection of several constraints that regulate the single contaminants concentration or an air quality index/metric that quantify the cabin air quality level. To maintain a proper level of cabin air quality along the time, the air quality should be monitored. To identify the cabin air quality status at a given time, measurements from multiple air sensors (located in various points throughout the ECS, such as the cabin, the mixing manifold and the fresh air duct) and information from the filtration system have to be properly used. The installation of sensors in the fresh air duct allows for the sensing of contaminants in the outside air flow supplied by an engine, an APU, an electric compressor or other air sources including ground supplies.

The adaptive environmental control system (aECS) described herein therefore utilises a new methodology that is able to optimize the system components functioning and/or the external air flow 11.

In particular, the new type of environmental control system 100 that is described herein comprises an additional controller as described above that is specifically configured to use the above algorithmic methodology to calculate the optimal components' operating point and external air flow rate. The controller differs to known controllers at least in that the controller is configured to calculate the optimal air flow rate based on an energy consumption of at least one other component of the aircraft. In particular, the controller is able to calculate optimal air flow rate based on another component of the aircraft that may itself undergo a change in energy consumption as a direct consequence of the change in air flow rate.

The environment control system (ECS) may therefore be described as being configured to control the flow rate of the external air being drawn into the environment based on the energy consumption of said at least one energy consuming component. It may also be described as being configured to do so based on change in an energy consumption of the component. It may also be described as being configured to change operating parameters of the energy consuming components based on a change in either, or both of the flow rate and the energy being consumed.

The aircraft, or the aECS itself may also comprise at least one air quality sensor and the controller uses the measurements from this sensor in the calculation of the optimal air flow rate and components' operating parameters. In other words, the calculation further takes into account the cabin air quality level by satisfying the cabin air quality constraints A new method of controlling the airflow within an aircraft therefore comprises providing an aECS 100 such as that described above that comprises a controller 40 and calculating, by the controller 40, (and using the algorithmic methodology described above) an air flow rate, or even an optimal air flow rate for external air being drawn into the aircraft. As mentioned above, the step of calculating the optimal air flow rate may be based on an energy consumption of another component or components of the system, aircraft or vehicle. The other component or components may be any component that requires energy to function and may further be any component that may have an energy consumption altered due to a change in an intake of air.

The method may also involve controlling the air flow rate, and/or the operating parameters of the components of the system based on a change in air flow rate and/or a change in energy consumption of the system components.

The method may also take into account an aircraft operating condition or conditions, which may comprise any, or all, of: (1) an external air flow $\dot{q}_{ext\ air}$, (2) time, (3) a number of passengers, (4) a flight segment and/or duration, and (5) working operative point.

Such methodology as described herein allows to further reduce the aircraft fuel burn by considering a wider range of energy consumptions (not only at the external air energy source) happening in the system. This is a new and improved way of operating the system. The methodology can be adapted to take into account the energy consumed by different components under different conditions without affecting the cabin air quality level. Moreover, the methodology can be adapted to consider different definitions of cabin air quality. The control algorithm obtained from the application of such methodology can assume different forms (such as a look-up table, an online optimization etc. etc.). Better performance can be reached by applying this methodology when compared with known systems and methods.

It is further projected that, due to the new system and method described herein, the aircraft transportation sector could realize annual fuel savings by reducing the outside air intake and increasing air recirculation.

**Claims**

1. An environment control system (ECS) (100) for controlling an environment in a vehicle, said system comprising at least one energy consuming component (20, 21, 31, 32, 33, 34, 35, 36), means for drawing external air into the environment and
a controller (40),
wherein said controller (40) is configured to control the flow rate of the external air being drawn into the environment based on the energy consumption of said at least one energy consuming component.

2. The ECS of claim 1 wherein
said controller (40) is further configured to calculate an optimal air flow rate for said external air (11) being drawn into said environment based on a change in said energy consumption of said at least one energy consuming component (20, 21, 31, 32, 33, 34, 35, 36).

3. The ECS of claim 1 or 2 wherein
said controller is further configured to alter operating conditions for said at least one energy consuming component based on a change in said energy consumption of said at least one energy consuming component (20, 21, 31, 32, 33, 34, 35, 36) and/or a change in said flow rate.

4. The ECS of any preceding claim wherein said controller (40) uses an algorithmic methodology to control said flow rate, and wherein said algorithm comprises:

$$\begin{bmatrix} \dot{q}_{ext\,air\,OPT} \\ OP_1 \\ ... \\ OP_N \end{bmatrix} = \min \sum_{i=1}^{\overset{N\,=\,\#\,of\,components}{consuming\,a\,variable\,energy}} E_i\,(\dot{q}_{ext\,air}, t, \#PAX, Flight\,segment$$

$$/\,duration, OP\,...\,)$$

$$s.t. \quad cabin\,air\,quality\,constraints$$

where $E_i$ represents the energy consumption associated with said at least one component i at a given aircraft operating condition.

5. The ECS of any preceding claim wherein said controller (40) is configured to calculate said air flow rate by further taking into account vehicle operating condition or conditions, said condition or conditions comprising any, or all, of: an external air flow $\dot{q}_{ext\,air}$, time, a number of passengers within said vehicle, a flight/journey segment and/or duration, a working operative point.

6. The ECS of any of any preceding claim wherein said system comprises at least one air quality sensor (34) and wherein said controller (40) is further configured to calculate an optimal air flow rate based on a cabin air quality level that has been measured by said at least one air quality sensor (34).

7. The ECS of any preceding claim wherein said energy consumption of said at least one energy consuming component (20, 21, 31, 32, 33, 34, 35, 36) is affected by a change in said flow rate.

8. The ECS of any preceding claim wherein said energy consuming component comprises any, or all of: an engine (bleed ECS) (10), an electric compressor (electric EC) (10), APU or ground air supply, a recirculation fan or fans (39), a dehumidification system, a cooling system , a gas or particulate filtration system (36).

9. The ECS of any preceding claim wherein said controller (40) is configured to control and/or calculate said air flow rate based at a given vehicle operating condition or plurality of vehicle operating conditions.

10. A method of controlling airflow into an environment within a vehicle comprising:

providing an environmental control system (ECS) (100) that comprises a controller (40), means for drawing external air into said environment, and at least one energy consuming component (20, 21, 31, 32, 33, 34, 35, 36), and
the method further comprising controlling, via the controller (40), the airflow rate of external air being drawn into the environment, the air flow rate being based on an energy consumption of the at least one energy consuming component (20, 21, 31, 32, 33, 34, 35, 36).

11. The method of claim 10 further comprising:
calculating, via said controller (40), an optimal air flow rate for said external air being drawn into said environment.

12. The method of claim 10 or 11 wherein said controller uses an algorithmic methodology to control said flow rate, and wherein said algorithm comprises :

$$\begin{bmatrix} \dot{q}_{ext\,air\,OPT} \\ OP_1 \\ ... \\ OP_N \end{bmatrix} = \min \sum_{i=1}^{N\,=\,\#\,of\,components\atop consuming\,a\,variable\,energy} E_i\,(\dot{q}_{ext\,air}, t, \#PAX, Flight\,segment$$

$$/\,duration, OP\,...\,)$$

$$s.t. \quad cabin\,air\,quality\,constraints$$

where $E_i$ represents the energy consumption associated with said component i at a given aircraft operating condition.

13. The method of any of claims 10 to 12 comprising calculating, via said controller (40), an optimal air flow rate by further taking into account an aircraft operating condition or aircraft operating conditions, said vehicle operating condition or conditions comprising any, or all, of: an external air flow $\dot{q}_{ext\,air}$, time, a number of passengers, a flight/journey segment and/or duration, working operative point.

14. The method of any of claims 10 to 13 wherein said at least one energy consuming component (20, 21, 31, 32, 33, 34, 35, 36) comprises any, or all of: an engine (bleed ECS) (10), an electric compressor (electric ECS), APU or ground air supply, a recirculation fan or fans, a dehumidification system, a cooling system, a $CO_2$ or VOC or particulate filtration system (36).

15. The method of any of claims 10 to 14 further comprising, calculating, via said controller (40), an optimal air flow rate based on an energy consumption of said at least one energy consuming component at a given vehicle operating condition or given vehicle operating conditions.

FIG. 1

Europäisches
Patentamt

European
Patent Office

Office européen
des brevets

# EUROPEAN SEARCH REPORT

Application Number

EP 18 30 5838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 003 814 B2 (ZYWIAK THOMAS M., BRUNO LOUIS J.) 14 April 2015 (2015-04-14) | 1,10 | INV. B64D13/00 |
| A | * column 1, lines 6-9; claim 1; figures * | 2-9, 11-15 | |
| | ----- | | |
| A | EP 0 087 935 A2 (GARRETT CORP [US]) 7 September 1983 (1983-09-07) * abstract; figures * | 1-15 | |
| | ----- | | |
| A | EP 0 610 692 A1 (HAGENUK FAHRZEUGKLIMA GMBH [DE]) 17 August 1994 (1994-08-17) * abstract; figures * | 1-15 | |
| | ----- | | |

TECHNICAL FIELDS
SEARCHED (IPC)

B64D

The present search report has been drawn up for all claims

| Place of search | Date of completion of the search | Examiner |
|---|---|---|
| Munich | 11 December 2018 | Salentiny, Gérard |

EPO FORM 1503 03.82 (P04C01)

## ANNEX TO THE EUROPEAN SEARCH REPORT
## ON EUROPEAN PATENT APPLICATION NO.

EP 18 30 5838

This annex lists the patent family members relating to the patent documents cited in  the above-mentioned European search report.
The members are as contained in the European Patent Office EDP file on
The European Patent Office is in no way liable for these particulars which are merely given for the purpose of information.

11-12-2018

| Patent document cited in search report | | Publication date | Patent family member(s) | | Publication date |
|---|---|---|---|---|---|
| US 9003814 | B2 | 14-04-2015 | EP | 2592001 A2 | 15-05-2013 |
| | | | IL | 222971 A | 31-07-2016 |
| | | | JP | 5727990 B2 | 03-06-2015 |
| | | | JP | 2013103715 A | 30-05-2013 |
| | | | US | 2013118191 A1 | 16-05-2013 |
| EP 0087935 | A2 | 07-09-1983 | EP | 0087935 A2 | 07-09-1983 |
| | | | US | 4506594 A | 26-03-1985 |
| EP 0610692 | A1 | 17-08-1994 | AT | 147028 T | 15-01-1997 |
| | | | DE | 4304194 A1 | 18-08-1994 |
| | | | DE | 59401432 D1 | 13-02-1997 |
| | | | DK | 0610692 T3 | 16-06-1997 |
| | | | EP | 0610692 A1 | 17-08-1994 |
| | | | ES | 2097555 T3 | 01-04-1997 |
| | | | FI | 940643 A | 13-08-1994 |
| | | | US | 5462481 A | 31-10-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9896215 B2
- US 9884281 B2
- US 9889939 B2
- US 20180065752 A1
- US 20160318613 A1
- US 20160214723 A1